# EUROPÄISCHE PATENTSCHRIFT

(11) **EP 4 253 655 B1**
(45) Veröffentlichungstag und Bekanntmachung des Hinweises auf die Patenterteilung: **07.05.2025**
(21) Anmeldenummer: 23159282.5
(22) Anmeldetag: 01.03.2023
(51) Int. Cl.: E01C 19/26

(54) **VERFAHREN ZUM BETREIBEN EINER BODENBEARBEITUNGSMASCHINE**
METHOD FOR OPERATING A SOIL WORKING MACHINE
PROCÉDÉ DE FONCTIONNEMENT D'UNE MACHINE DE TRAITEMENT DU SOL

(30) Priorität: 01.04.2022 DE 102022107761
(43) Veröffentlichungstag der Anmeldung: 04.10.2023
(73) Patentinhaber: Hamm AG, 95643 Tirschenreuth (DE)
(72) Erfinder: Krockauer, Rainer, Plößberg (DE); Mahler, Gerhard, Windischeschenbach (DE); Würner, Christian, Tirschenreuth (DE); Meindl, Klaus, Bärnau (DE)
(74) Vertreter: Ruttensperger Lachnit Trossin Gomoll

(56) Entgegenhaltungen:
- CN-A- 110 331 639
- CN-A- 113 152 215
- DE-T5- 112019 004 206

## Beschreibung

Die vorliegende Erfindung betrifft ein Verfahren zum Betreiben einer Bodenbearbeitungsmaschine, wie zum Beispiel Bodenverdichter.

Aus der DE 10 2019 127 640 A1 ist ein Verfahren zum Betreiben einer als Bodenverdichter ausgebildeten Bodenbearbeitungsmaschine bekannt, bei welchem ein maximaler Lenkwinkel, mit welchem die Bodenbearbeitungsmaschine in einem Kurven-Lenkzustand gelenkt werden kann, in Abhängigkeit von der Fahrgeschwindigkeit der Bodenbearbeitungsmaschine vorgegeben wird. Mit zunehmender Fahrgeschwindigkeit wird der maximale Lenkwinkel, also das maximale Ausmaß, in welchem die Bodenbearbeitungsmaschine gelenkt werden kann, verringert. Dadurch wird die Gefahr vermieden, dass bei zu starkem Einlenken bei hoher Fahrgeschwindigkeit die Bodenbearbeitungsmaschine umkippt. Weiter wird eine durch die in einem Kurven-Lenkzustand auftretenden Fliehkräfte übermäßig ungleiche Belastung, welche eine Walzeneinheit einer derartigen Bodenbearbeitungsmaschine in ihrem kurveninneren Bereich und ihrem kurvenäußeren Bereich auf den zu bearbeitenden, beispielsweise zu verdichtenden Boden ausübt, vermieden, wodurch auch ein in Richtung einer Walzendrehachse ungleiches Bodenbearbeitungsverhalten vermieden wird.

Ein Verfahren zum Betreiben einer Bodenbearbeitungsmaschine gemäß dem Oberbegriff des Anspruchs 1 ist aus der CN 113 152 215 A bekannt. Bei diesem Verfahren werden ein Lenkwinkel und eine Fahrgeschwindigkeit der Bodenbearbeitungsmaschine erfasst. Ferner werden vermittels einer Mehrzahl von berührungsfrei arbeitenden Abstandssensoren und einer Mehrzahl von mit Berührung arbeitenden Abstandssensoren der Abstand des vorderen Bereichs und der Abstand des hinteren Bereichs der Bodenbearbeitungsmaschine zu einem Rand des zu bearbeitenden Bodens erfasst und damit der Winkel, unter welchem die Bodenbearbeitungsmaschine sich den Rand annähert bzw. sich von diesem entfernt, bestimmt. Bei der Annäherung der Bodenbearbeitungsmaschine an den Rand und beim Entfernen der Bodenbearbeitungsmaschine von dem Rand werden der Lenkwinkel und die Geschwindigkeit der Bodenbearbeitungsmaschine so eingestellt, dass der Winkel, unter dem die Bodenbearbeitungsmaschine sich dem Rand annähert bzw. sich von diesem entfernt einem Soll-Annäherungswinkel bzw. einem Soll-Entfernwinkel entspricht.

Es ist die Aufgabe der vorliegenden Erfindung, ein Verfahren zum Betreiben einer Bodenbearbeitungsmaschine, wie zum Beispiel Bodenverdichter, vorzusehen, mit welchem bei erhöhter Betriebssicherheit eine hohe Effizienz in der Bodenbearbeitung erhalten wird.

Erfindungsgemäß wird diese Aufgabe gelöst durch ein Verfahren zum Betreiben einer Bodenbearbeitungsmaschine, wobei die Bodenbearbeitungsmaschine zwei in einer Maschinenlängsrichtung zueinander mit Abstand angeordnete Walzeneinheiten umfasst, wobei jede der beiden Walzeneinheiten um eine Walzendrehachse drehbar ist, wobei zum Lenken der Bodenbearbeitungsmaschine die beiden Walzeneinheiten bezüglich einander verschwenkbar sind, wobei in einem einem Lenkzustand der Bodenbearbeitungsmaschine mit minimalem Lenkausmaß entsprechenden Geradeaus-Lenkzustand die Walzendrehachsen der beiden Walzeneinheiten zueinander im Wesentlichen parallel orientiert sind und in einem einem Lenkzustand der Bodenbearbeitungsmaschine mit von dem minimalem Lenkausmaß sich unterscheidendem Lenkausmaß entsprechenden Kurven-Lenkzustand die Walzendrehachsen der beiden Walzeneinheiten eine von einer parallelen Orientierung abweichende Orientierung bezüglich einander aufweisen, wobei das Verfahren die Maßnahmen umfasst:
a) Bereitstellen eines eine maximal zulässige Fahrgeschwindigkeit in Abhängigkeit von dem Lenkausmaß wiedergebenden Lenkausmaß-Fahrgeschwindigkeit-Zusammenhangs,
b) Erfassen eines Ist-Lenkausmaßes der Bodenbearbeitungsmaschine,
c) Einstellen einer Fahrgeschwindigkeit der Bodenbearbeitungsmaschine derart, dass die Fahrgeschwindigkeit die gemäß dem bei der Maßnahme a) bereitgestellten Lenkausmaß-Fahrgeschwindigkeit-Zusammenhang dem bei der Maßnahme b) erfassten Ist-Lenkausmaß zugeordnete maximal zulässige Fahrgeschwindigkeit nicht übersteigt.

In Abkehr von der aus dem Stand der Technik bekannten Lehre wird bei dem erfindungsgemäßen Verfahren nicht die Fahrgeschwindigkeit einer Bodenbearbeitungsmaschine, sondern das Lenkausmaß als Führungsgröße berücksichtigt. Dies hat zur Folge, dass unabhängig von der Fahrgeschwindigkeit eine derart betriebene Bodenbearbeitungsmaschine in jedem Ausmaß bis zu einem maximal möglichen Lenkausmaß der Bodenbearbeitungsmaschine gelenkt werden kann. Ein potenziell sicherheitskritischer Zustand, in welchem eine derartige Bodenbearbeitungsmaschine in einen bestimmten Bereich des zu bearbeitenden Bodens gelenkt werden soll, dies jedoch aufgrund einer geschwindigkeitsabhängig vorgegebenen Begrenzung des Lenkausmaßes nicht möglich ist, während eine Bedienperson erwartet, dass die Maschine in diesen Bereich und beispielsweise an einem Hindernis vorbei bewegt werden kann, kann daher nicht auftreten.

Ferner gestattet das erfindungsgemäße Verfahren unabhängig von der Fahrgeschwindigkeit jederzeit das Ausnutzen des bei einer derartigen Bodenbearbeitungsmaschine maximal möglichen Lenkausmaßes, so dass jeder mit dem maximalen Lenkausmaß erreichbare Bereich des zu bearbeitenden Bodens auch überfahren werden kann. Es ist nicht erforderlich, aufgrund einer Beschränkung des Lenkausmaßes eine Mehrzahl von zusätzlichen Überfahrten zu tätigen, um die Bodenbearbeitungsmaschine in einen Bereich des zu bearbeitenden Bodens zu bewegen, welcher ohne Begrenzung des Lenkausmaßes mit einer einzigen oder einer geringeren Anzahl an Überfahrten erreicht werden könnte.

Wird im Betrieb einer Bodenbearbeitungsmaschine ein Zustand erreicht, in dem die Fahrgeschwindigkeit über der dem Ist-Lenkausmaß der Bodenbearbeitungsmaschine zugeordneten maximal zulässigen Fahrgeschwindigkeit liegt, kann erfindungsgemäß bei der Maßnahme c) die Fahrgeschwindigkeit derart verringert werden, dass die Fahrgeschwindigkeit im Wesentlichen der dem Ist-Lenkausmaß zugeordneten maximal zulässigen Fahrgeschwindigkeit entspricht.

Kehrt die Bodenbearbeitungsmaschine in einen Lenkzustand zurück, welcher eine zuvor vorgegebene Begrenzung der Fahrgeschwindigkeit nicht oder nicht mehr in dem vorgenommenen Ausmaß erfordert, kann vorgesehen sein, dass dann, wenn nach Verringern der Fahrgeschwindigkeit auf die dem Ist-Lenkausmaß der Bodenbearbeitungsmaschine zugeordnete maximal zulässige Fahrgeschwindigkeit der Lenkzustand in Richtung zu einem Lenkzustand mit geringerem Lenkausmaß verändert wird:
- die Fahrgeschwindigkeit auf die dem Lenkzustand mit geringerem Lenkausmaß zugeordnete maximal zulässige Fahrgeschwindigkeit erhöht wird, wenn die vor Verringerung der Fahrgeschwindigkeit vorhandene Fahrgeschwindigkeit höher ist als die dem Lenkzustand mit geringerem Lenkausmaß zugeordnete maximal zulässige Fahrgeschwindigkeit, oder
- die Fahrgeschwindigkeit auf die vor Verringerung der Fahrgeschwindigkeit vorhandene Fahrgeschwindigkeit erhöht wird, wenn die vor Verringerung der Fahrgeschwindigkeit vorhandene Fahrgeschwindigkeit kleiner ist als die dem Lenkzustand mit geringerem Lenkausmaß zugeordnete maximal zulässige Fahrgeschwindigkeit.

Bei einer einfach zu realisierenden und eine Interaktion einer Bedienperson nicht erfordernden Vorgehensweise kann die Fahrgeschwindigkeit bei Veränderung des Lenkzustandes in Richtung zu dem Lenkzustand mit geringerem Lenkausmaß automatisch auf die dem Lenkzustand mit geringerem Lenkausmaß zugeordnete maximal zulässige Fahrgeschwindigkeit oder die vor Verringerung der Fahrgeschwindigkeit vorhandene Fahrgeschwindigkeit erhöht werden.

Alternativ kann vorgesehen sein, dass die Fahrgeschwindigkeit bei Veränderung des Lenkzustandes in Richtung zu dem Lenkzustand mit geringerem Lenkausmaß nur bei Vorliegen einer Geschwindigkeit-Erhöhen-Bestätigung auf die dem Lenkzustand mit geringerem Lenkausmaß zugeordnete maximal zulässige Fahrgeschwindigkeit oder die vor Verringerung der Fahrgeschwindigkeit vorhandene Fahrgeschwindigkeit erhöht wird. Eine derartige Geschwindigkeit-Erhöhen-Bestätigung kann beispielsweise durch eine seitens einer Bedienperson vorzunehmende Manipulation eines hierfür vorgesehenen Bestätigungsorgans, beispielsweise eines Schalters oder dgl., erzeugt werden, so dass eine Erhöhung der Fahrgeschwindigkeit tatsächlich auch nur dann auftritt, wenn die Bedienperson dies zulässt und daher die Bedienperson nicht von einer plötzlich einsetzenden Geschwindigkeitserhöhung überrascht werden kann.

Soll die Fahrgeschwindigkeit der Bodenbearbeitungsmaschine, ausgehend von einer unter der dem Ist-Lenkausmaß zugeordneten maximal zulässigen Fahrgeschwindigkeit liegenden Fahrgeschwindigkeit, auf eine über der dem Ist-Lenkausmaß zugeordneten maximal zulässigen Fahrgeschwindigkeit liegende Soll-Fahrgeschwindigkeit erhöht werden, kann zum Vermeiden einer zu hohen Fahrgeschwindigkeit bei der Maßnahme c) die Fahrgeschwindigkeit der Bodenbearbeitungsmaschine derart erhöht werden, dass sie im Wesentlichen der dem Ist-Lenkausmaß zugeordneten maximal zulässigen Fahrgeschwindigkeit entspricht, so dass die grundsätzlich vorgegebene Soll-Fahrgeschwindigkeit zunächst nicht erreicht wird.

Wird nach Erhöhen der Fahrgeschwindigkeit auf die dem Ist-Lenkausmaß zugeordnete maximal zulässige Fahrgeschwindigkeit der Lenkzustand in Richtung zu einem Lenkzustand mit geringerem Lenkausmaß verändert:
- kann die Fahrgeschwindigkeit derart erhöht werden, dass sie im Wesentlichen der dem Lenkzustand mit geringerem Lenkausmaß zugeordneten maximal zulässigen Fahrgeschwindigkeit entspricht, wenn die Soll-Fahrgeschwindigkeit höher ist als die dem Lenkzustand mit geringerem Lenkausmaß zugeordnete maximal zulässige Fahrgeschwindigkeit, oder
- kann die Fahrgeschwindigkeit derart erhöht werden, dass sie im Wesentlichen der Soll-Fahrgeschwindigkeit entspricht, wenn die Soll-Fahrgeschwindigkeit kleiner ist als die dem Lenkzustand mit geringerem Lenkausmaß zugeordnete maximal zulässige Fahrgeschwindigkeit.

Auch bei derartiger Rückkehr in einen Lenkzustand mit geringerem Lenkausmaß kann die Fahrgeschwindigkeit bei Veränderung des Lenkzustandes in Richtung zu dem Lenkzustand mit geringerem Lenkausmaß automatisch auf die dem Lenkzustand mit geringerem Lenkausmaß zugeordnete maximal zulässige Fahrgeschwindigkeit oder die Soll-Fahrgeschwindigkeit erhöht werden.

Alternativ kann zum Erhöhen der Betriebssicherheit die Fahrgeschwindigkeit bei Veränderung des Lenkzustandes in Richtung zu dem Lenkzustand mit geringerem Lenkausmaß nur bei Vorliegen einer Geschwindigkeit-Erhöhen-Bestätigung auf die dem Lenkzustand mit geringerem Lenkausmaß zugeordnete maximal zulässige Fahrgeschwindigkeit oder die Soll-Fahrgeschwindigkeit erhöht werden.

Bei einem einfach zu realisierenden, eine hohe Betriebssicherheit gewährleistenden Ausgestaltungsbeispiel des Lenkausmaß-Fahrgeschwindigkeit-Zusammenhangs kann wenigstens in einem Bereich der Fahrgeschwindigkeit die maximal zulässige Fahrgeschwindigkeit mit zunehmendem Lenkausmaß im Wesentlichen linear abnehmen.

Eine Beschränkung der Fahrgeschwindigkeit in einem Zustand, in welchem dies tatsächlich nicht erforderlich ist, kann dadurch vermieden werden, dass bei unter einem Schwellen-Lenkausmaß liegendem Lenkausmaß die maximal zulässige Fahrgeschwindigkeit einer maximal möglichen Fahrgeschwindigkeit der Bodenbearbeitungsmaschine entspricht.

Da auch bei vergleichsweise geringer Fahrgeschwindigkeit die Gefahr eines Umkippens bzw. einer ungleichmäßigen Belastung des zu bearbeitenden Bodens durch eine Walzeneinheit im Wesentlichen nicht besteht, kann weiter vorgesehen sein, dass bei unter einer Schwellen-Fahrgeschwindigkeit liegender Fahrgeschwindigkeit eine von einem Lenkausmaß abhängige Veränderung der Fahrgeschwindigkeit nicht erfolgt.

Das Lenkausmaß kann beispielsweise beruhend auf einem Stellzustand wenigstens eines Lenkaktuators ermittelt werden. Ein derartiger Lenkaktuator kann beispielsweise als Kolben/Zylinder-Einheit ausgebildet sein, welche zwischen einem Maschinenrahmen einer Bodenbearbeitungsmaschine und einem daran schwenkbar getragenen und eine Walzeneinheit drehbar tragenden Walzenrahmen wirkt. Der Stellzustand eines derartigen Lenkaktuators kann erfasst werden, und diese Information kann zur Bestimmung des Lenkausmaßes herangezogen werden. Alternativ oder zusätzlich kann das Lenkausmaß beruhend auf einem Betätigungsausmaß eines Lenk-Betätigungsorgans, wie zum Beispiel eines Lenkrades oder eines Joysticks, ermittelt werden. Auch dieses Betätigungsausmaß kann vermittels einer entsprechenden Sensorik erfasst werden, und diese Information kann zur Bestimmung des Lenkausmaßes herangezogen werden.

Die Fahrgeschwindigkeit kann beispielsweise beruhend auf einer Drehgeschwindigkeit wenigstens einer der Walzeneinheiten ermittelt werden. Alternativ oder zusätzlich kann die Fahrgeschwindigkeit beruhend auf einem Stellzustand eines hydraulischen Antriebssystems für wenigstens eine der Walzeneinheiten ermittelt werden. Ein derartiges hydraulisches Antriebssystem umfasst im Allgemeinen eine oder mehrere Hydraulikpumpen und in Zuordnung zu jeder angetriebenen Walzeneinheit wenigstens einen Hydraulikmotor. Der Hydraulikmotor oder/und die diesen speisende Hydraulikpumpe können mit variablem Schluckvolumen bzw. variablem Fördervolumen arbeiten, um die Menge des zirkulierenden Fluids zur Vorgabe der Fahrgeschwindigkeit einstellen zu können. Der Stellzustand eines derartigen Hydraulikmotors bzw. einer derartigen Hydraulikpumpe bzw. die Fördermenge des diese durchströmenden Fluids sind somit verknüpft mit der Fahrgeschwindigkeit einer Bodenbearbeitungsmaschine. Bei einer weiteren Variante kann die Fahrgeschwindigkeit beruhend auf einem Stellzustand eines Fahr-Betätigungsorgans ermittelt werden. Solange kein Steuereingriff bzw. Regeleingriff zum Verringern der Fahrgeschwindigkeit vorliegt, besteht auch zwischen dem Stellzustand eines Fahr-Betätigungsorgans, beispielsweise eines durch eine Bedienperson zu betätigenden Fahrhebels, und der Fahrgeschwindigkeit einer Bodenbearbeitungsmaschine ein im Wesentlichen eindeutiger Zusammenhang. Der Stellzustand eines derartigen Fahr-Betätigungsorgans kann jedoch insbesondere dann, wenn ein Eingriff zum Verringern der Fahrgeschwindigkeit erfolgt ist, als ein eine durch eine Bedienperson eigentlich vorgegebene Soll-Fahrgeschwindigkeit repräsentierender Parameter berücksichtigt werden. Bei einer weiteren Option zur Bestimmung der Fahrgeschwindigkeit kann diese beruhend auf einer von einem Positionserfassungssystem bereitgestellten Positionsinformation ermittelt werden. Ein derartiges Positionserfassungssystem kann beispielsweise satellitengestützt sein, wie zum Beispiel das GPS. Bei der Positionsinformation kann durch Ermittlung der Änderung der Position einer Bodenbearbeitungsmaschine auf deren Geschwindigkeit geschlossen werden.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmaschine;
- Fig. 2: eine prinzipartige Darstellung einer Bodenbearbeitungsmaschine in einem Kurven-Lenkzustand;
- Fig. 3: ein Lenkausmaß-Fahrgeschwindigkeit-Diagramm mit einem Lenkausmaß-Fahrgeschwindigkeit-Zusammenhang.

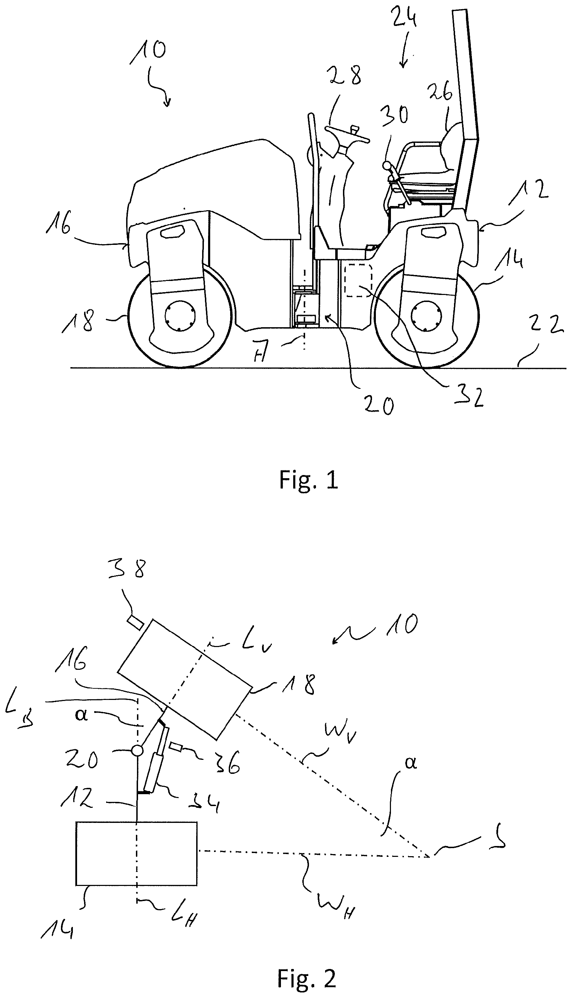

In Fig. 1 ist eine als Bodenverdichter ausgebildete Bodenbearbeitungsmaschine allgemein mit 10 bezeichnet. Die Bodenbearbeitungsmaschine 10 umfasst an einem Hinterwagen 12 eine im dargestellten Beispiel als Verdichterwalze ausgebildete Walzeneinheit 14, und umfasst an einem Vorderwagen 16 eine als Verdichterwalze ausgebildete Walzeneinheit 18. Jede der Walzeneinheiten 14, 18 ist um eine zugehörige Walzendrehachse am Hinterwagen 12 bzw. am Vorderwagen 16 drehbar getragen. Beispielsweise kann jede der Walzeneinheiten 14, 18 zur Drehung um die jeweils zugeordnete Walzendrehachse angetrieben sein.

Im dargestellten Ausgestaltungsbeispiel ist jede der Walzeneinheiten 14, 18 mit einem mit Stahlmaterial aufgebautem Walzenmantel ausgebildet. Bei einer alternativen Ausgestaltungsart könnte eine oder könnten beide Walzeneinheiten 14, 18 in Richtung der jeweiligen Walzendrehachse geteilt ausgebildet sein oder in Richtung der Walzendrehachse aufeinander folgend eine Mehrzahl von Gummirädern umfassen.

Der Hinterwagen 12 und der Vorderwagen 16 sind im Bereich eines Knickgelenks 20 um eine Lenkachse A schwenkbar miteinander verbunden. Die Lenkachse A kann zu dem Boden 22, auf welchem die Bodenbearbeitungsmaschine 10 sich bewegt, im Wesentlichen orthogonal orientiert sein, kann jedoch auch eine von einer orthogonalen Orientierung abweichende oder/und bei Durchführung eines Lenkvorgangs sich verändernde Winkellage bezüglich des Bodens 22 aufweisen.

Am Hinterwagen 12 ist ein allgemein mit 24 bezeichneter Bedienstand für eine Bedienperson vorgesehen. Am Bedienstand 24 ist ein Sitz 26 für die Bedienperson angeordnet. Ferner ist am Bedienstand 24 ein im dargestellten Beispiel als Lenkrad ausgebildetes Lenk-Betätigungsorgan 28 vorgesehen. Durch Betätigung des Lenk-Betätigungsorgans 28 wird ein Lenksystem aktiviert, welches den Vorderwagen 16 bezüglich des Hinterwagens 12 verschwenkt, so dass, ausgehend von einem Geradeaus-Fahrzustand, in welchem die Drehachsen der beiden Walzeneinheiten 14, 18 zueinander im Wesentlichen parallel sind, der Hinterwagen 12 und der Vorderwagen 16 bezüglich einander angewinkelt werden und dementsprechend auch die Drehachsen der beiden Walzeneinheiten 14, 18 in einen zueinander angewinkelten Zustand gelangen.

Am Bedienstand 24 ist ferner ein beispielsweise als Fahrhebel ausgebildetes Fahr-Betätigungsorgan 30 vorgesehen. Durch Verschwenken des Fahr-Betätigungsorgans 30 kann eine Bedienperson eine Geschwindigkeit vorgeben, mit welcher die Bodenbearbeitungsmaschine 10 über den zu bearbeitenden Boden 22 bewegt wird. Entsprechend dem Ausmaß der Betätigung des Fahr-Betätigungsorgans 30 wird ein im Allgemeinen hydraulisch arbeitendes Fahrantriebssystem aktiviert, um eine oder beide der Walzeneinheiten 14, 18 zur Rotation um die jeweils zugeordnete Walzendrehachse anzutreiben.

Die Bodenbearbeitungsmaschine 10 umfasst ferner eine allgemein mit 32 bezeichnete Ansteuereinheit. Die Ansteuereinheit 32 empfängt beispielsweise Information über das Ausmaß der Betätigung des Lenk-Betätigungsorgans 28 und über das Ausmaß der Betätigung des Fahr-Betätigungsorgans 30 und steuert die entsprechenden Systembereiche, also ein Lenksystem bzw. ein Fahrantriebssystem, entsprechend dem jeweils erfassten Ausmaß der Betätigung an, um die Bodenbearbeitungsmaschine 10 mit der durch eine Bedienperson vorgegebenen Geschwindigkeit in der durch die Bedienperson vorgegebenen Richtung zu bewegen. Die Ansteuereinheit 32 kann einen oder mehrere programmierbare Mikroprozessoren umfassen, welche unter Abarbeitung abgespeicherter Steuerprogramme unter Berücksichtigung von verschiedene Parameter, wie zum Beispiel eine Fahrgeschwindigkeit oder ein Lenkausmaß, indizierenden Eingaben verschiedene Systembereiche der Bodenbearbeitungsmaschine 10 ansteuert, um einen für diese vorgesehenen Bodenbearbeitungsbetrieb durchzuführen.

In Fig. 2 ist eine derartige Bodenbearbeitungsmaschine 10 in prinzipartiger Weise dargestellt. Zu erkennen ist der in Richtung einer Hinterwagen-Längsachse L_{H} langgestreckte Hinterwagen 14, an welchem die Walzeneinheit 14 um die dieser zugeordnete Walzendrehachse W_{H} drehbar getragen ist. Gleichermaßen ist an dem in Richtung einer Vorderwagen-Längsachse Lv sich erstreckenden Vorderwagen 16 die Walzeneinheit 18 um die dieser zugeordnete Walzendrehachse Wv drehbar. Die jeweilige Längsachse L_{H} bzw. Lv kann jeweils als eine zur Walzendrehachse W_{H}, Wv orthogonale Achse bzw. Erstreckungsrichtung des Hinterwagens 14 bzw. des Vorderwagens 16 betrachtet werden. Weiter kann die Hinterwagen-Längsachse L_{H} grundsätzlich auch als Längsachse L_{B} der Bodenbearbeitungsmaschine 10 betrachtet werden.

In Fig. 2 ist ein zwischen dem Hinterwagen 14 und dem Vorderwagen 16 wirkender Lenkaktuator 34 zu erkennen. Der Lenkaktuator 34 ist im dargestellten Ausgestaltungsbeispiel als Kolben/Zylinder-Einheit ausgebildet, welche durch Zufuhr bzw. Abfuhr von Druckfluid in ihrer Längsausdehnung veränderbar ist und dabei eine Verschwenkbewegung des Vorderwagens 16 bezüglich des Hinterwagens 14 im Bereich des Knickgelenks 20 auslöst. Aus Stabilitätsgründen können beispielsweise zwei beidseits des Knickgelenks 20 vorgesehene und zwischen dem Hinterwagen 14 und dem Vorderwagen 16 wirkende Lenkaktuatoren 34 vorgesehen sein.

Zumindest einem derartigen Lenkaktuator 34 kann ein Lenksensor 36 zugeordnet sein, welcher den Stellzustand des Lenkaktuators 34 erfasst. Dieser Stellzustand des Lenkaktuators 34 repräsentiert im Wesentlichen den Lenkzustand bzw. das Lenkausmaß, mit welchem die Bodenbearbeitungsmaschine 10 in einem Kurven-Fahrzustand gelenkt wird. Insbesondere kann ein derartiges Lenkausmaß als der in Fig. 2 erkennbare Winkel α zwischen der Längsachse L_{B} der Bodenbearbeitungsmaschine bzw. der Hinterwagen-Längsachse L_{H} und der Vorderwagen-Längsachse Lv betrachtet werden. In einem Geradeaus-Lenkzustand, welcher einem Lenkzustand mit minimalem Lenkausmaß entspricht, ist der Winkel α gleich Null. Man erkennt in Fig. 2, dass der Winkel α sich auch zwischen den in einem Kurven-Lenkzustand, also einem Lenkzustand mit von dem minimalen Lenkausmaß abweichendem Lenkausmaß, zueinander nicht parallel orientierten Walzendrehachsen W_{H}, Wv abbildet. Weisen die beiden Walzeneinheiten 14, 18 den gleichen Durchmesser auf, so schneiden sich die Walzendrehachse Wv, W_{H} in einem Schnittpunkt S. Weisen die Walzeneinheiten 14, 18 zueinander unterschiedliche Durchmesser auf, so schneiden sich die auf dem Boden 22 projizierten Walzendrehachsen Wv, W_{H} in diesem Schnittpunkt S.

Die Fahrgeschwindigkeit der Bodenbearbeitungsmaschine 10 kann beispielsweise durch einen Geschwindigkeitssensor 38 erfasst werden, welcher die Drehzahl einer der Walzeneinheiten 14, 18, im dargestellten Beispiel der Walzeneinheit 18, erfasst. Da im Betrieb einer derartigen Bodenbearbeitungsmaschine 10 im Wesentlichen kein Schlupf bezüglich des zu bearbeitenden Bodens 22 auftritt, kann angenommen werden, dass die Drehgeschwindigkeit beispielsweise der Walzeneinheit 18 eindeutig verknüpft ist mit der Fahrgeschwindigkeit der Bodenbearbeitungsmaschine 10. Alternativ könnte die Fahrgeschwindigkeit auch aus dem Stellzustand des hydraulisch wirkenden Fahrantriebssystems oder dem Stellzustand des Fahr-Betätigungsorgans 30 abgeleitet werden.

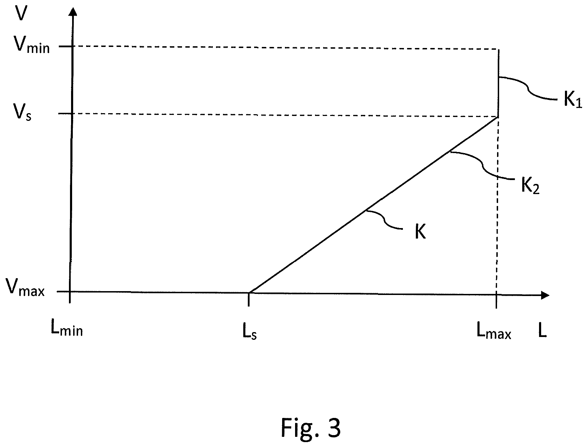

Gemäß der vorliegenden Erfindung wird der Bodenverdichter 10 derart betrieben, dass grundsätzlich ein Zusammenhang besteht zwischen der maximal zulässigen Fahrgeschwindigkeit der Bodenbearbeitungsmaschine 10 und dem Lenkzustand, also beispielsweise dem Ausmaß, in welchem der Vorderwagen 16 im Bereich des Knickgelenks 20 bezüglich des Hinterwagens 14 abgeknickt ist, was wiederum durch den Winkel α repräsentiert ist. Die Fig. 3 zeigt einen Zusammenhang zwischen dem Lenkausmaß L, beispielsweise repräsentiert durch den Lenkwinkel α, und der Fahrgeschwindigkeit V der Bodenbearbeitungsmaschine 10. Insbesondere zeigt die Fig. 3 anhand der Kurve K einen Lenkausmaß-Fahrgeschwindigkeit-Zusammenhang, welcher vorgibt, mit welcher maximal zulässigen Fahrgeschwindigkeit die Bodenbearbeitungsmaschine 10 in Abhängigkeit von dem jeweils vorhandenen Lenkzustand bzw. Lenkausmaß betrieben werden kann. Dieses tatsächlich vorhandene und beispielsweise durch den Lenksensor 36 erfasste und durch den Winkel α repräsentierte Lenkausmaß wird als Ist-Lenkausmaß betrachtet.

Die Fig. 3 zeigt, dass die Bodenbearbeitungsmaschine 10 grundsätzlich mit einer zwischen einer minimalen Geschwindigkeit Vₘᵢₙ und einer maximalen Fahrgeschwindigkeit Vₘₐₓ betrieben werden kann. Dabei kann die minimale Fahrgeschwindigkeit Vₘᵢₙ beispielsweise einer Fahrgeschwindigkeit von 0 km/h, also einem Stillstandzustand, entsprechen. Die maximale Fahrgeschwindigkeit Vₘₐₓ kann beispielsweise die maximal mögliche Fahrgeschwindigkeit sein und bei einem Wert von etwa 20 km/h liegen. Grundsätzlich könnte auch vorgesehen sein, dass die maximale Fahrgeschwindigkeit Vₘₐₓ durch eine Bedienperson auf einen unter der maximal möglichen Fahrgeschwindigkeit liegenden Wert begrenzt werden kann.

Das Lenkausmaß L kann zwischen einem minimalen Lenkausmaß Lₘᵢₙ, also einem Lenkwinkel α von 0° bzw. einem Geradeaus-Lenkzustand, und einem maximalen Lenkausmaß Lₘₐₓ verstellt werden, welches beispielsweise im Bereich von etwa 35° bei Berücksichtigung des Winkels α als Lenkwinkel bzw. Lenkausmaß liegen kann.

Der durch die Kurve K repräsentierte Lenkausmaß-Fahrgeschwindigkeit-Zusammenhang kann grundsätzlich in zwei Bereiche K₁ und K₂ aufgegliedert werden. Der Bereich K₁ ist einem Bereich vergleichsweise geringer Fahrgeschwindigkeit der Bodenbearbeitungsmaschine 10 zugeordnet, in welchem diese mit einer Fahrgeschwindigkeit unter einer Schwellen-Fahrgeschwindigkeit Vₛ von beispielsweise etwa 5 km/h betrieben wird. In diesem Geschwindigkeitsbereich besteht kein kritischer Zusammenhang zwischen dem Lenkausmaß und der Fahrgeschwindigkeit, so dass für jede in diesem Geschwindigkeitsbereich liegende Fahrgeschwindigkeit gewünschtenfalls das maximale Ausmaß Lₘₐₓ gewählt werden kann bzw. eine in Abhängigkeit vom Lenkausmaß L erfolgende Beschränkung der maximal zulässigen Fahrgeschwindigkeit nicht erfolgt.

Übersteigt die Fahrgeschwindigkeit V die Schwellen-Fahrgeschwindigkeit Vₛ, nimmt gemäß dem durch den Bereich K₂ repräsentierten Bereich des Lenkausmaß-Fahrgeschwindigkeit-Zusammenhangs K mit zunehmendem Lenkausmaß L die maximal zulässige Fahrgeschwindigkeit ab. Bei im Bereich eines Schwellen-Lenkausmaßes Lₛ liegendem Lenkausmaß L entspricht die maximal zulässige Fahrgeschwindigkeit der maximalen bzw. maximal möglichen Fahrgeschwindigkeit Vₘₐₓ der Bodenbearbeitungsmaschine 10. Mit in Richtung zu dem maximalen Lenkausmaß Lₘₐₓ zunehmendem Lenkausmaß nimmt die maximal zulässige Fahrgeschwindigkeit bis zur Schwellen-Fahrgeschwindigkeit Vₛ ab, welche dann als maximal zulässige Fahrgeschwindigkeit vorgegeben wird, wenn das Lenkausmaß das maximale Lenkausmaß Lₘₐₓ erreicht.

Wird die Bodenbearbeitungsmaschine 10 nur in vergleichsweise kleinem Ausmaß gelenkt, was bedeutet, dass im dargestellten Beispiel das Lenkausmaß unter dem Schwellenlenkausmaß Lₛ liegt, ist eine Begrenzung der Fahrgeschwindigkeit nicht erforderlich, so dass bei unter dem Schwellen-Lenkausmaß Lₛ liegendem Lenkausmaß L die Bodenbearbeitungsmaschine 10 gewünschtenfalls mit einer Fahrgeschwindigkeit Vₘₐₓ über den zu bearbeitenden Boden 22 bewegt werden kann.

Unter Berücksichtigung des in Fig. 3 dargestellten und durch die Kurve K repräsentierten Lenkausmaß-Fahrgeschwindigkeit-Zusammenhangs kann die Bodenbearbeitungsmaschine 10 derart betrieben werden, dass dann, wenn diese, beispielsweise ausgehend von einem Geradeaus-Lenkzustand, also einem Lenkzustand mit minimalem Lenkausmaß Lₘᵢₙ über den Boden 22 mit einer Fahrgeschwindigkeit bewegt wird, welche im Bereich zwischen der Schwellenfahrgeschwindigkeit Vₛ und der maximalen Fahrgeschwindigkeit Vₘₐₓ liegt, ein Eingriff in die Fahrgeschwindigkeit nicht erfolgt, solange das Lenkausmaß unter dem Schwellen-Lenkausmaß Lₛ ist oder/und die gemäß der Betätigung des Fahr-Betätigungsorgans 30 vorgegebene Fahrgeschwindigkeit V die dem jeweils vorliegenden Ist-Lenkausmaß zugeordnete maximal zulässige Fahrgeschwindigkeit nicht übersteigt.

Wird der Lenkzustand in Richtung zu einem Lenkzustand mit höherem Lenkausmaß verändert, kann dies dazu führen, dass die momentan vorliegende Fahrgeschwindigkeit die dem Lenkzustand mit höherem Lenkausmaß zugeordnete maximal zulässige Fahrgeschwindigkeit übersteigt bzw. darüber liegt. Dies führt dazu, dass vermittels der Ansteuereinheit 32 das Fahrantriebssystem derart angesteuert wird, dass die Fahrgeschwindigkeit verringert wird, bis diese im Bereich der für den jeweils dann vorhandenen Ist-Lenkzustand zugeordneten maximal zulässigen Fahrgeschwindigkeit entspricht. Dies erfolgt beispielsweise durch Eingriff in das hydraulische Fahrantriebssystem durch Verringern des Fördervolumens einer oder mehrerer Hydraulikpumpen oder/und Verringern des Schluckvolumens eines oder mehrerer Hydraulikmotoren. Wird das Lenk-Betätigungsorgan 28 in einem derartigen Zustand in Richtung weiteres Einlenken, also weiteres Vergrößern des Lenkausmaßes L, betätigt, hat dies eine weitere Verringerung der Fahrgeschwindigkeit V auf die dem dann vorhandenen Ist-Lenkzustand zugeordnete maximal zulässige Fahrgeschwindigkeit zur Folge.

Wird, ausgehend von einem derartigen Zustand, bei welchem, bedingt durch ein vergleichsweise großes Ist-Lenkausmaß, die Fahrgeschwindigkeit verringert wurde, das Lenkausmaß wieder verringert, kann dementsprechend auch die Fahrgeschwindigkeit wieder erhöht werden, ggf. bis auf diejenige Fahrgeschwindigkeit, welche vor Einleiten der Verringerung der Fahrgeschwindigkeit durch das entsprechende Ausmaß der Betätigung des Fahr-Betätigungsorgans 30 vermittels einer Bedienperson vorgegeben worden ist. Dies bedeutet, dass automatisch mit abnehmendem Lenkausmaß die Fahrgeschwindigkeit entsprechend der zunehmenden maximal zulässigen Fahrgeschwindigkeit erhöht wird, beispielsweise bis der vor dem Eingriff zum Verringern der Fahrgeschwindigkeit vorgegebene Wert der Fahrgeschwindigkeit wieder erreicht ist. So lange die abhängig vom Ist-Lenkzustand vorgegebene maximal zulässige Fahrgeschwindigkeit noch unter der vor dem Eingriff in die Geschwindigkeit vorgegebenen Fahrgeschwindigkeit liegt, kann die Fahrgeschwindigkeit nur auf die zu dem jeweils vorhandenen Ist-Lenkausmaß zugehörige maximal zulässige Fahrgeschwindigkeit erhöht werden. Erst dann, wenn diese unter der zuvor vorhandenen Fahrgeschwindigkeit liegt, kann auch diese zuvor vorhandene Fahrgeschwindigkeit wieder eingestellt werden.

Alternativ zu diesem automatischen Rückführen der Fahrgeschwindigkeit auf den vor dem Regeleingriff vorhandenen Wert der Fahrgeschwindigkeit ist es möglich, eine Erhöhung der Fahrgeschwindigkeit nur dann zuzulassen bzw. freizugeben, wenn dies durch eine die Bodenbearbeitungsmaschine 10 bedienende Bedienperson tatsächlich auch bestätigt wird. Hierzu kann am Bedienstand 24 ein beispielsweise in Form eines Schalters, eines Druckknopfs oder dergleichen ausgebildetes Betätigungsorgan vorgesehen sein, über welches eine Bedienperson eine Geschwindigkeit-Erhöhen-Bestätigung eingeben kann, woraufhin dann unter der Ansteuerung der Ansteuereinheit 32 das Fahrantriebssystem so betrieben wird, dass die Geschwindigkeit wieder erhöht wird, beispielsweise auf die vor dem Eingriff zum Verringern der Fahrgeschwindigkeit vorgegebene bzw. vorhandene Fahrgeschwindigkeit. Um der Bedienperson zu indizieren, dass die Fahrgeschwindigkeit wieder erhöht werden kann, kann beispielsweise vorgesehen sein, dass dann, wenn das Lenkausmaß wieder auf einen derartigen Wert verringert worden ist, dass die vor dem Eingriff in die Fahrgeschwindigkeit vorhandene Fahrgeschwindigkeit tatsächlich auch wieder erreicht werden kann, beispielsweise auf einem Display eine entsprechende Information angezeigt wird, so dass die Bedienperson dann durch Manipulation des Betätigungsorgans die Geschwindigkeitserhöhung freigeben kann.

Wird die Bodenbearbeitungsmaschine 10 in einem Kurven-Lenkzustand, also einem Zustand mit einem von dem Wert Null verschiedenen Lenkwinkel α, betrieben und wird die Geschwindigkeit der Bodenbearbeitungsmaschine 10 in einem derartigen Lenkzustand derart erhöht, dass sie die dem Lenkzustand bzw. dem Ist-Lenkausmaß zugeordnete maximal zulässige Fahrgeschwindigkeit überschreiten würde, da die gemäß dem Betätigungsausmaß des Fahr-Betätigungsorgans 30 vorgegebene Soll-Fahrgeschwindigkeit über der für den vorhandenen Ist-Lenkzustand vorgegebenen maximal zulässigen Fahrgeschwindigkeit liegt, wird die Fahrgeschwindigkeit nur bis zum Erreichen der maximal zulässigen Fahrgeschwindigkeit für diesen Ist-Lenkzustand erhöht. Wird das Lenk-Betätigungsorgan 28 zum Erhöhen des Lenkausmaßes betätigt, hat dies auch eine Verringerung der maximal zulässigen Fahrgeschwindigkeit zur Folge, was wiederum einen Eingriff in das Fahrantriebssystem zum Verringern der Fahrgeschwindigkeit auf die dann vorhandene maximal zulässige Fahrgeschwindigkeit zur Folge hat. Wird, ausgehend von einem derartigen Zustand, das Lenk-Betätigungsorgan 28 in Richtung zu einem geringeren Lenkausmaß betätigt, nimmt die maximal zulässige Fahrgeschwindigkeit zu, so dass dann automatisch die Fahrgeschwindigkeit der Bodenbearbeitungsmaschine 10 in Richtung zu der entsprechend der Betätigung des Fahr-Betätigungsorgans 30 vorgegebenen Soll-Fahrgeschwindigkeit erhöht werden kann. So lange die maximal zulässige Fahrgeschwindigkeit jedoch unter dieser Soll-Fahrgeschwindigkeit liegt, wird die maximal zulässige Fahrgeschwindigkeit tatsächlich auch nicht überschritten. Erst dann, wenn durch weiteres Verringern des Lenkausmaßes, also ein kleineres Ist-Lenkausmaß, die maximal zulässige Fahrgeschwindigkeit die Soll-Fahrgeschwindigkeit unterschreitet, kann die Geschwindigkeit auf die Soll-Fahrgeschwindigkeit erhöht werden und die Bodenbearbeitungsmaschine 10 entsprechend der durch das Ausmaß der Betätigung des Fahr-Betätigungsorgans 30 vorgegebenen Soll-Fahrgeschwindigkeit bewegt werden.

Alternativ zu diesem automatisiert, also ohne Interaktion einer Bedienperson vorgegebenen Erhöhen der Fahrgeschwindigkeit auf die Soll-Fahrgeschwindigkeit, kann auch hier vorgesehen sein, dass bei Verringerung des Lenkausmaßes eine Veränderung der Fahrgeschwindigkeit, ausgehend von der zunächst gedrosselten und unter der Soll-Fahrgeschwindigkeit liegenden Fahrgeschwindigkeit, nämlich der zunächst vorgegebenen maximal zulässigen Fahrgeschwindigkeit, nur dann erhöht wird, wenn vermittels einer Bedienperson eine entsprechende Geschwindigkeit-Erhöhen-Bestätigung durch Manipulation eines hierfür vorgesehenen Bestätigungsorgans verfolgt. Auch hier könnte beispielsweise vorgesehen sein, dass dann, wenn aufgrund des vorhandenen Ist-Lenkzustandes die Bodenbearbeitungsmaschine 10 auch tatsächlich mit der Soll-Fahrgeschwindigkeit bewegt werden kann, dies der Bedienperson akustisch oder visuell signalisiert wird, so dass diese dann durch Manipulation des Betätigungsorgans die Erhöhung der Fahrgeschwindigkeit freigeben kann.

Mit der erfindungsgemäßen Vorgehensweise, bei welcher in einem Bereich des Lenkausmaßes und einem Bereich der Fahrgeschwindigkeit das Lenkausmaß als Führungsgröße für die maximal zulässige Fahrgeschwindigkeit genutzt wird, werden potentiell kritische Fahrsituationen, welche ein Umkippen der Bodenbearbeitungsmaschine zur Folge haben könnten oder zumindest zu einem ungleichmäßigen Bodenbearbeitungsverhalten führen können, grundsätzlich vermieden. Gleichwohl bleibt die Bodenbearbeitungsmaschine in maximalem Ausmaß lenkbar, so dass Situationen, in welchen eine Bodenbearbeitungsmaschine aufgrund einer beschränkten Lenkbarkeit nicht mehr in einen gewünschten Bereich bewegt werden kann oder an einem Hindernis vorbeibewegt werden kann, vermieden werden.

Es ist darauf hinzuweisen, dass eine derartige Vorgehensweise auch bei anders strukturierten Bodenbearbeitungsmaschinen Anwendung finden kann, beispielsweise bei Bodenbearbeitungsmaschinen, bei welchen eine Lenkbewegung dadurch erfolgt, dass jede der beiden Walzeneinheiten über einen jeweiligen Lenkschemel an einem zentralen Maschinenrahmen der Bodenbearbeitungsmaschine schwenkbar getragen ist. Auch können andere Parameter zur Bereitstellung einer Information über die Fahrgeschwindigkeit bzw. das Lenkausmaß genutzt werden. Beispielsweise kann die Fahrgeschwindigkeit durch Änderung der über ein beispielsweise satellitengestütztes Positionserfassungssystem bereitgestellten Information über die Position einer Bodenbearbeitungsmaschine ermittelt werden. Das Lenkausmaß kann auch aus der Betätigung eines Lenk-Betätigungsorgans abgeleitet werden, welche durch eine einem derartigen Lenk-Betätigungsorgan zugeordnete Sensorik erfasst werden kann.

Der Lenkausmaß-Fahrgeschwindigkeit-Zusammenhang kann insbesondere in demjenigen Bereich, in welchem die maximal zulässige Fahrgeschwindigkeit mit dem Lenkausmaß variiert, einen anderen Verlauf als den in Fig. 3 dargestellten linearen Verlauf aufweisen. Beispielsweise könnte hier ein stufenartiger Verlauf gewählt werden, ebenso wie ein parabelartiger oder asymptotischer Verlauf. Weiter ist darauf hinzuweisen, dass der Lenkausmaß-Fahrgeschwindigkeit-Zusammenhang nicht notwendigerweise in Form eines Diagramms, wie es in Fig. 3 dargestellt ist, hinterlegt werden muss. Dieser könnte auch in Form einer oder mehrerer mathematischer Formeln oder eines Kennfelds bereitgestellt werden.

## Patentansprüche

1. Verfahren zum Betreiben einer Bodenbearbeitungsmaschine, wobei die Bodenbearbeitungsmaschine zwei in einer Maschinenlängsrichtung (L) zueinander mit Abstand angeordnete Walzeneinheiten (14, 18) umfasst, wobei jede der beiden Walzeneinheiten (14, 18) um eine Walzendrehachse (W_{H}, Wv) drehbar ist, wobei zum Lenken der Bodenbearbeitungsmaschine (10) die beiden Walzeneinheiten (14, 18) bezüglich einander verschwenkbar sind, wobei in einem einem Lenkzustand der Bodenbearbeitungsmaschine mit minimalem Lenkausmaß (Lₘᵢₙ) entsprechenden Geradeaus-Lenkzustand die Walzendrehachsen (W_{H}, Wv) der beiden Walzeneinheiten (14, 18) zueinander im Wesentlichen parallel orientiert sind und in einem einem Lenkzustand der Bodenbearbeitungsmaschine (10) mit von dem minimalem Lenkausmaß (Lₘᵢₙ) sich unterscheidendem Lenkausmaß entsprechenden Kurven-Lenkzustand die Walzendrehachsen (W_{H}, Wv) der beiden Walzeneinheiten (14, 18) eine von einer parallelen Orientierung abweichende Orientierung bezüglich einander aufweisen, wobei das Verfahren die Maßnahme umfasst:
b) Erfassen eines Ist-Lenkausmaßes der Bodenbearbeitungsmaschine (10), **dadurch gekennzeichnet, dass** das Verfahren ferner die Maßnahmen umfasst:
a) Bereitstellen eines eine maximal zulässige Fahrgeschwindigkeit in Abhängigkeit von dem Lenkausmaß (L) wiedergebenden Lenkausmaß-Fahrgeschwindigkeit-Zusammenhangs (K),
c) Einstellen einer Fahrgeschwindigkeit (V) der Bodenbearbeitungsmaschine (10) derart, dass die Fahrgeschwindigkeit (V) die gemäß dem bei der Maßnahme a) bereitgestellten Lenkausmaß-Fahrgeschwindigkeit-Zusammenhang (K) dem bei der Maßnahme b) erfassten Ist-Lenkausmaß zugeordnete maximal zulässige Fahrgeschwindigkeit nicht übersteigt.

2. Verfahren nach Anspruch 1,
**dadurch gekennzeichnet, dass** dann, wenn die Fahrgeschwindigkeit über der dem Ist-Lenkausmaß der Bodenbearbeitungsmaschine (10) zugeordneten maximal zulässigen Fahrgeschwindigkeit liegt, bei der Maßnahme c) die Fahrgeschwindigkeit (V) derart verringert wird, dass die Fahrgeschwindigkeit (V) im Wesentlichen der dem Ist-Lenkausmaß zugeordneten maximal zulässigen Fahrgeschwindigkeit entspricht.

3. Verfahren nach Anspruch 2,
**dadurch gekennzeichnet, dass** dann, wenn nach Verringern der Fahrgeschwindigkeit (V) auf die dem Ist-Lenkausmaß zugeordnete maximal zulässige Fahrgeschwindigkeit der Lenkzustand in Richtung zu einem Lenkzustand mit geringerem Lenkausmaß (L) verändert wird:
- die Fahrgeschwindigkeit (V) auf die dem Lenkzustand mit geringerem Lenkausmaß (L) zugeordnete maximal zulässige Fahrgeschwindigkeit erhöht wird, wenn die vor Verringerung der Fahrgeschwindigkeit (V) vorhandene Fahrgeschwindigkeit (V) höher ist als die dem Lenkzustand mit geringerem Lenkausmaß (L) zugeordnete maximal zulässige Fahrgeschwindigkeit, oder
- die Fahrgeschwindigkeit (V) auf die vor Verringerung der Fahrgeschwindigkeit (V) vorhandene Fahrgeschwindigkeit (V) erhöht wird, wenn die vor Verringerung der Fahrgeschwindigkeit (V) vorhandene Fahrgeschwindigkeit (V) kleiner ist als die dem Lenkzustand mit geringerem Lenkausmaß (L) zugeordnete maximal zulässige Fahrgeschwindigkeit.

4. Verfahren nach Anspruch 3,
**dadurch gekennzeichnet, dass** die Fahrgeschwindigkeit (V) bei Veränderung des Lenkzustandes in Richtung zu dem Lenkzustand mit geringerem Lenkausmaß (L) automatisch auf die dem Lenkzustand mit geringerem Lenkausmaß (L) zugeordnete maximal zulässige Fahrgeschwindigkeit oder die vor Verringerung der Fahrgeschwindigkeit (V) vorhandene Fahrgeschwindigkeit (V) erhöht wird.

5. Verfahren nach Anspruch 3,
**dadurch gekennzeichnet, dass** die Fahrgeschwindigkeit (V) bei Veränderung des Lenkzustandes in Richtung zu dem Lenkzustand mit geringerem Lenkausmaß (L) nur bei Vorliegen einer Geschwindigkeit-Erhöhen-Bestätigung auf die dem Lenkzustand mit geringerem Lenkausmaß (L) zugeordnete maximal zulässige Fahrgeschwindigkeit oder die vor Verringerung der Fahrgeschwindigkeit (V) vorhandene Fahrgeschwindigkeit (V) erhöht wird.

6. Verfahren nach einem der Ansprüche 1-5,
**dadurch gekennzeichnet, dass** dann, wenn die Fahrgeschwindigkeit (V) der Bodenbearbeitungsmaschine, ausgehend von einer unter der dem Ist-Lenkausmaß zugeordneten maximal zulässigen Fahrgeschwindigkeit liegenden Fahrgeschwindigkeit (V), auf eine über der dem Ist-Lenkausmaß zugeordneten maximal zulässigen Fahrgeschwindigkeit liegende Soll-Fahrgeschwindigkeit erhöht werden soll, bei der Maßnahme c) die Fahrgeschwindigkeit (V) der Bodenbearbeitungsmaschine (10) derart erhöht wird, dass sie im Wesentlichen der dem Ist-Lenkausmaß zugeordneten maximal zulässigen Fahrgeschwindigkeit entspricht.

7. Verfahren nach Anspruch 6,
**dadurch gekennzeichnet, dass** dann, wenn nach Erhöhen der Fahrgeschwindigkeit (V) auf die dem Ist-Lenkausmaß zugeordnete maximal zulässige Fahrgeschwindigkeit der Lenkzustand in Richtung zu einem Lenkzustand mit geringerem Lenkausmaß (L) verändert wird:
- die Fahrgeschwindigkeit (V) derart erhöht wird, dass sie im Wesentlichen der dem Lenkzustand mit geringerem Lenkausmaß (L) zugeordneten maximal zulässigen Fahrgeschwindigkeit entspricht, wenn die Soll-Fahrgeschwindigkeit höher ist als die dem Lenkzustand mit geringerem Lenkausmaß (L) zugeordnete maximal zulässige Fahrgeschwindigkeit, oder
- die Fahrgeschwindigkeit (V) derart erhöht wird, dass sie im Wesentlichen der Soll-Fahrgeschwindigkeit entspricht, wenn die Soll-Fahrgeschwindigkeit kleiner ist als die dem Lenkzustand mit geringerem Lenkausmaß (L) zugeordnete maximal zulässige Fahrgeschwindigkeit.

8. Verfahren nach Anspruch 7,
**dadurch gekennzeichnet, dass** die Fahrgeschwindigkeit (V) bei Veränderung des Lenkzustandes in Richtung zu dem Lenkzustand mit geringerem Lenkausmaß (L) automatisch auf die dem Lenkzustand mit geringerem Lenkausmaß (L) zugeordnete maximal zulässige Fahrgeschwindigkeit oder die Soll-Fahrgeschwindigkeit erhöht wird.

9. Verfahren nach Anspruch 7, **dadurch gekennzeichnet, dass** die Fahrgeschwindigkeit (V) bei Veränderung des Lenkzustandes in Richtung zu dem Lenkzustand mit geringerem Lenkausmaß (L) nur bei Vorliegen einer Geschwindigkeit-Erhöhen-Bestätigung auf die dem Lenkzustand mit geringerem Lenkausmaß (L) zugeordnete maximal zulässige Fahrgeschwindigkeit oder die Soll-Fahrgeschwindigkeit erhöht wird.

10. Verfahren nach einem der Ansprüche 1-9,
**dadurch gekennzeichnet, dass** wenigstens in einem Bereich der Fahrgeschwindigkeit (V) die maximal zulässige Fahrgeschwindigkeit mit zunehmendem Lenkausmaß (L) im Wesentlichen linear abnimmt.

11. Verfahren nach einem der Ansprüche 1-10,
**dadurch gekennzeichnet, dass** bei unter einem Schwellen-Lenkausmaß (Ls) liegendem Lenkausmaß (L) die maximal zulässige Fahrgeschwindigkeit einer maximalen Fahrgeschwindigkeit (Vₘₐₓ) entspricht.

12. Verfahren nach einem der Ansprüche 1-11,
**dadurch gekennzeichnet, dass** bei unter einer Schwellen-Fahrgeschwindigkeit (Vₛ) liegender Fahrgeschwindigkeit (V) eine von einem Lenkausmaß (L) abhängige Veränderung der Fahrgeschwindigkeit nicht erfolgt.

13. Verfahren nach einem der Ansprüche 1-12,
**dadurch gekennzeichnet, dass** das Lenkausmaß (L) beruhend auf einem Stellzustand wenigstens eines Lenkaktuators (34) ermittelt wird, oder/und dass das Lenkausmaß (L) beruhend auf einem Betätigungsausmaß eines Lenk-Betätigungsorgans (28) ermittelt wird.

14. Verfahren nach einem der Ansprüche 1-13,
**dadurch gekennzeichnet, dass** die Fahrgeschwindigkeit (V) beruhend auf einer Drehgeschwindigkeit wenigstens einer der Walzeneinheiten (14, 18) ermittelt wird, oder/und dass die Fahrgeschwindigkeit (V) beruhend auf einem Stellzustand eines hydraulischen Antriebssystems für wenigstens eine der Walzeneinheiten ermittelt wird, oder/und dass die Fahrgeschwindigkeit (V) beruhend auf einem Stellzustand eines Fahr-Betätigungsorgans (30) ermittelt wird, oder/und dass die Fahrgeschwindigkeit (V) beruhend auf einer von einem Positionserfassungssystem bereitgestellten Positionsinformation ermittelt wird.

## Claims

1. A method for operating a soil processing machine, wherein the soil processing machine comprises two roller units (14, 18) arranged at a distance from one another in a machine longitudinal direction (L), wherein each of the two roller units (14, 18) is rotatable around a roller axis of rotation (W_{H}, Wᵥ), wherein the two roller units (14, 18) are pivotable with respect to one another in order to steer the soil processing machine (10), wherein in a straight-ahead steering state corresponding to a steering state of the soil processing machine with a minimum extent of steering (Lₘᵢₙ), the roller axes of rotation (W_{H}, W_{V}) of the two roller units (14, 18) are oriented essentially in parallel to one another, and in a cornering steering state corresponding to a steering state of the soil processing machine (10) having an extent of steering differing from the minimum extent of steering (Lₘᵢₙ), the roller axes of rotation (W_{H}, W_{V}) of the two roller units (14, 18) have an orientation with respect to one another that deviates from a parallel orientation, wherein the method comprises the following measure:
b) detecting an actual extent of steering of the soil processing machine (10), **characterized in that** the method further comprises the following measures:
a) providing an extent of steering-driving speed relationship (K) reflecting a maximum permissible driving speed as a function of the extent of steering (L),
c) setting a driving speed (V) of the soil processing machine (10) in such a way that the driving speed (V) does not exceed the maximum permissible driving speed assigned to the actual extent of steering detected in measure b) in accordance with the extent of steering-driving speed relationship (K) provided in measure a).

2. The method as claimed in claim 1,
**characterized in that** if the driving speed is above the maximum permissible driving speed assigned to the actual extent of steering of the soil processing machine (10), the driving speed (V) is reduced in measure c) in such a way that the driving speed (V) essentially corresponds to the maximum permissible driving speed assigned to the actual extent of steering.

3. The method as claimed in claim 2,
**characterized in that** if, after decreasing the driving speed (V) to the maximum permissible driving speed assigned to the actual extent of steering, the steering state is changed in the direction toward a steering state with a lesser extent of steering (L):
- the driving speed (V) is increased to the maximum permissible driving speed assigned to the steering state having a lesser extent of steering (L) if the driving speed (V) existing before the reduction of the driving speed (V) is higher than the maximum permissible driving speed assigned to the steering state having a lesser extent of steering (L), or
- the driving speed (V) is increased to the driving speed (V) existing before the reduction of the driving speed (V) if the driving speed (V) existing before the reduction of the driving speed (V) is less than the maximum permissible driving speed assigned to the steering state having a lesser extent of steering (L).

4. The method as claimed in claim 3,
**characterized in that** the driving speed (V) is increased automatically to the maximum permissible driving speed assigned to the steering state with a smaller extent of steering (L) or to the driving speed (V) that existed before the driving speed (V) was reduced when the steering state changes in the direction toward the steering state with a smaller extent of steering (L).

5. The method as claimed in claim 3,
**characterized in that** the driving speed (V) is increased to the maximum permissible driving speed assigned to the steering state with a smaller extent of steering (L) or to the driving speed (V) that existed before the driving speed (V) was reduced when the steering state changes in the direction toward the steering state with a smaller extent of steering (L) only when a speed increase confirmation is present.

6. The method as claimed in to any one of claims 1-5,
**characterized in that** if the driving speed (V) of the soil processing machine is to be increased, starting from a driving speed (V) below the maximum permissible driving speed assigned to the actual extent of steering, to a target driving speed above the maximum permissible driving speed assigned to the actual extent of steering, in measure c) the driving speed (V) of the soil processing machine (10) is increased in such a way that it essentially corresponds to the maximum permissible driving speed assigned to the actual extent of steering.

7. The method as claimed in claim 6,
**characterized in that** if, after increasing the driving speed (V) to the maximum permissible driving speed assigned to the actual extent of steering, the steering state is changed in the direction toward a steering state with a lesser extent of steering (L):
- the driving speed (V) is increased in such a way that it essentially corresponds to the maximum permissible driving speed assigned to the steering state having a lesser extent of steering (L) if the target driving speed is higher than the maximum permissible driving speed assigned to the steering state having a lesser extent of steering (L), or
- the driving speed (V) is increased in such a way that it essentially corresponds to the target driving speed if the target driving speed is less than the maximum permissible driving speed assigned to the steering state having a lesser extent of steering (L).

8. The method as claimed in claim 7,
**characterized in that** the driving speed (V) is increased automatically to the maximum permissible driving speed assigned to the steering state with a smaller extent of steering (L) or to the target driving speed when the steering state changes in the direction toward the steering state with a smaller extent of steering (L).

9. The method as claimed in claim 7,
**characterized in that** the driving speed (V) is increased to the maximum permissible driving speed assigned to the steering state with a smaller extent of steering (L) or to the target driving speed when the steering state changes in the direction toward the steering state with a smaller extent of steering (L) only when a speed increase confirmation is present.

10. The method as claimed in any one of claims 1-9,
**characterized in that** at least in one range of the driving speed (V), the maximum permissible driving speed decreases essentially linearly with increasing extent of steering (L).

11. The method as claimed in any one of claims 1-10,
**characterized in that** when the extent of steering (L) is below a threshold extent of steering (L_{S}), the maximum permissible driving speed corresponds to a maximum driving speed (Vₘₐₓ).

12. The method as claimed in any one of claims 1-11,
**characterized in that** when the driving speed (V) is below a threshold driving speed (Vₛ), there is no change in the driving speed dependent on an extent of steering (L).

13. The method as claimed in any one of claims 1-12,
**characterized in that** the extent of steering (L) is determined based on a positioning state of at least one steering actuator (34), and/or **in that** the extent of steering (L) is determined based on an extent of actuation of a steering actuating element (28).

14. The method as claimed in any one of claims 1-13,
**characterized in that** the driving speed (V) is determined based on a rotational speed of at least one of the roller units (14, 18) and/or **in that** the driving speed (V) is determined based on a positioning state of a hydraulic drive system for at least one of the roller units, and/or **in that** the driving speed (V) is determined based on an positioning state of a driving actuating element (30), and/or **in that** the driving speed (V) is determined based on position information provided by a position detection system.

## Revendications

1. Un procédé pour faire fonctionner une machine de traitement du sol, dans lequel la machine de traitement du sol comprend deux unités de rouleaux (14, 18) disposées à distance l'une de l'autre dans le sens longitudinal (L) de la machine, dans lequel chacune des deux unités de rouleaux (14, 18) peut tourner autour d'un axe de rotation de rouleau (W_{H}, W_{V}), les deux unités de rouleaux (14, 18) pouvant pivoter l'une par rapport à l'autre afin de diriger la machine de traitement du sol (10), dans lequel dans un état de direction en ligne droite correspondant à un état de direction de la machine de traitement du sol ayant une amplitude de braquage minimale (Lₘᵢₙ), les axes de rotation des rouleaux (W_{H}, W_{V}) des deux unités de rouleaux (14, 18) sont orientés essentiellement parallèlement l'un à l'autre, et dans un état de direction en virage correspondant à un état de braquage de la machine de traitement du sol (10) ayant une amplitude de braquage différente de l'amplitude de braquage minimale (Lₘᵢₙ), les axes de rotation des rouleaux (W_{H}, W_{V}) des deux unités de rouleaux (14, 18) ont une orientation l'un par rapport à l'autre qui s'écarte d'une orientation parallèle, dans lequel le procédé comprend la mesure suivante :
b) détecter une amplitude de braquage réelle de la machine de traitement du sol (10),
**caractérisé en ce que** le procédé comprend en outre les mesures suivantes :
a) fournir une relation amplitude de braquage-vitesse de conduite (K) reflétant une vitesse de conduite maximale admissible en fonction de l'amplitude de braquage (L),
b) régler une vitesse de conduite (V) de la machine de traitement du sol (10) de telle sorte que la vitesse de conduite (V) ne dépasse pas la vitesse de conduite maximale autorisée attribuée à l'amplitude de braquage réelle détectée à l'étape b) conformément à la relation amplitude de braquage-vitesse de conduite (K) fournie à l'étape a).

2. Le procédé selon la revendication 1,
**caractérisé en ce que** lorsque la vitesse de conduite est supérieure à la vitesse de conduite maximale autorisée attribuée à l'amplitude de braquage réelle de la machine de traitement du sol (10), la vitesse de conduite (V) est réduite dans la mesure c) de telle sorte que la vitesse de conduite (V) correspond essentiellement à la vitesse de conduite maximale autorisée attribuée à l'amplitude de braquage réelle.

3. Le procédé selon la revendication 2,
**caractérisé en ce que** lorsque, après avoir diminué la vitesse de conduite (V) jusqu'à la vitesse de conduite maximale autorisée attribuée à l'amplitude de braquage réelle, l'état de direction est modifié dans le sens d'un état de direction ayant une moindre amplitude de braquage (L) :
- la vitesse de conduite (V) est augmentée jusqu'à la vitesse de conduite maximale autorisée attribuée à l'état de direction ayant une moindre amplitude de braquage (L) lorsque la vitesse de conduite (V) qui existait avant la réduction de la vitesse de conduite (V) est supérieure à la vitesse de conduite maximale autorisée attribuée à l'état de direction ayant une moindre amplitude de braquage (L), ou
- la vitesse de conduite (V) est augmentée jusqu'à la vitesse de conduite (V) qui existait avant la réduction de la vitesse de conduite (V) lorsque la vitesse de conduite (V) qui existait avant la réduction de la vitesse de conduite (V) est inférieure à la vitesse de conduite maximale autorisée attribuée à l'état de direction ayant une moindre amplitude de braquage (L).

4. Le procédé selon la revendication 3,
**caractérisé en ce que** la vitesse de conduite (V) est automatiquement augmentée jusqu'à la vitesse de conduite maximale autorisée attribuée à l'état de direction ayant une moindre amplitude de braquage (L) ou jusqu'à la vitesse de conduite (V) qui existait avant la réduction de la vitesse de conduite (V) lorsque l'état de direction change dans le sens de l'état de direction ayant une moindre amplitude de braquage (L).

5. Le procédé selon la revendication 3,
**caractérisée en ce que** la vitesse de conduite (V) est augmentée jusqu'à la vitesse de conduite maximale autorisée attribuée à l'état de direction ayant une moindre amplitude de braquage (L) ou jusqu'à la vitesse de conduite (V) qui existait avant la réduction de la vitesse de conduite (V) lorsque l'état de direction change dans le sens de l'état de direction ayant une moindre amplitude de braquage (L) uniquement lorsqu'une confirmation d'augmentation de vitesse est présente.

6. Le procédé selon une des revendications 1 à 5,
**caractérisée en ce que** lorsque la vitesse de conduite (V) de la machine de traitement du sol doit être augmentée, en partant d'une vitesse de conduite (V) inférieure à la vitesse de conduite maximale autorisée attribuée à l'amplitude de braquage réelle, jusqu'à une vitesse de conduite cible supérieure à la vitesse de conduite maximale autorisée attribuée à l'amplitude de braquage réelle, dans la mesure c) la vitesse de conduite (V) de la machine de traitement du sol (10) est augmentée de telle sorte qu'elle correspond essentiellement à la vitesse de conduite maximale autorisée attribuée à l'amplitude de braquage réelle.

7. Le procédé selon la revendication 6,
**caractérisé en ce que** lorsque, après avoir augmenté la vitesse de conduite (V) jusqu'à la vitesse de conduite maximale autorisée attribuée à l'amplitude de braquage réelle, l'état de direction est modifié dans le sens d'un état de direction ayant une moindre amplitude de braquage (L) :
- la vitesse de conduite (V) est augmentée de telle sorte qu'elle correspond essentiellement à la vitesse de conduite maximale autorisée attribuée à l'état de direction ayant une moindre amplitude de braquage (L) lorsque la vitesse de conduite cible est supérieure à la vitesse de conduite maximale autorisée attribuée à l'état de direction ayant une moindre amplitude de braquage (L), ou
- la vitesse de conduite (V) est augmentée de telle sorte qu'elle correspond essentiellement à la vitesse de conduite cible lorsque la vitesse de conduite cible est inférieure à la vitesse de conduite maximale autorisée attribuée à l'état de direction ayant une moindre amplitude de direction (L).

8. Le procédé selon la revendication 7,
**caractérisé en ce que** la vitesse de conduite (V) est automatiquement augmentée jusqu'à la vitesse de conduite maximale autorisée attribuée à l'état de direction ayant une moindre amplitude de braquage (L) ou jusqu'à la vitesse de conduite cible lorsque l'état de direction change dans le sens de l'état de direction ayant une moindre amplitude de braquage (L).

9. Le procédé selon la revendication 7,
**caractérisé en ce que** la vitesse de conduite (V) est augmentée jusqu'à la vitesse de conduite maximale autorisée attribuée à l'état de direction ayant une moindre amplitude de braquage (L) ou jusqu'à la vitesse de conduite cible lorsque l'état de direction change dans le sens de l'état de direction ayant une moindre amplitude de braquage (L) uniquement lorsqu'une confirmation d'augmentation de vitesse est présente.

10. Le procédé selon une des revendications 1 à 9,
**caractérisé en ce que**, au moins dans une plage de la vitesse de conduite (V), la vitesse de conduite maximale autorisée diminue de manière essentiellement linéaire avec l'augmentation de l'amplitude de braquage (L).

11. Le procédé selon une des revendications 1 à 10,
**caractérisée en ce que** lorsque l'amplitude de braquage (L) est inférieure à une amplitude de braquage seuil (L_{S}), la vitesse de conduite maximale autorisée correspond à une vitesse de conduite maximale (Vₘₐₓ).

12. Le procédé selon une des revendications 1 à 11,
**caractérisée en ce que** lorsque la vitesse de conduite (V) est inférieure à une vitesse de conduite seuil (Vₛ), il n'y a pas de changement de la vitesse de conduite en fonction de l'amplitude de braquage (L).

13. Le procédé selon une des revendications 1 à 12,
**caractérisé en ce que** l'amplitude de braquage (L) est déterminée sur la base d'un état de positionnement d'au moins un actionneur de direction (34), et/ou **en ce que** l'amplitude de braquage (L) est déterminée sur la base d'une amplitude d'actionnement d'un élément d'actionnement de direction (28).

14. Le procédé selon une des revendications 1 à 13,
**caractérisé en ce que** la vitesse d'entraînement (V) est déterminée sur la base d'une vitesse de rotation d'au moins l'un des groupes de rouleaux (14, 18) et/ou **en ce que** la vitesse d'entraînement (V) est déterminée sur la base d'un état de positionnement d'un système d'entraînement hydraulique pour au moins l'un des groupes de rouleaux, et/ou **en ce que** la vitesse d'entraînement (V) est déterminée sur la base d'un état de positionnement d'un élément d'actionnement d'entraînement (30), et/ou **en ce que** la vitesse d'entraînement (V) est déterminée sur la base d'informations de position fournies par un système de détection de position.
